# EUROPÄISCHE PATENTANMELDUNG

(11) **EP 0 910 012 A2**
(43) Veröffentlichungstag der Anmeldung: **21.04.1999**
(21) Anmeldenummer: 98119605.8
(22) Anmeldetag: 16.10.1998
(51) Int. Cl.: G06F 5/06, G06F 13/16

(54) **Verfahren zur Abspeicherung von Daten in einem Speicher mit wahlfreiem Schreibzugriff und sequentiellem Lesezugriff**

(30) Priorität: 17.10.1997 DE 19746104
(71) Anmelder: Elsa AG, 52070 Aachen (DE)
(72) Erfinder: Wieninger, Peter, 52072 Aachen (DE)
(74) Vertreter: Kohlmann, Kai, Dipl.-Ing.

(57) **Zusammenfassung**

Die Erfindung betrifft ein Verfahren zum Schreiben und Lesen von Daten in bzw. aus einem Speicher mit mehreren in einer Reihenfolge angeordneten Speicherzellen, bei dem die Speicherzellen bereits während des Schreibens in geordneter Reihenfolge ausgelesen werden können.

Das Verfahren stellt sicher, das auch dann, wenn die Reihenfolge der Schreibzugriffe auf den Speicher nicht der in einem Programmablauf vorgegeben Reihenfolge der Schreibzugriffe entspricht, die Daten in geordneter Reihenfolge aus dem Speicher ausgelesenen werden können und nicht vertauscht werden.

## Beschreibung

Die Erfindung betrifft ein Verfahren zum Schreiben und Lesen von Daten in bzw. aus einem Speicher mit mehreren in einer Reihenfolge angeordneten Speicherzellen, bei dem die Speicherzellen bereits während des Schreibens in geordneter Reihenfolge ausgelesen werden können.

### 1. Stand der Technik

a) In der Datentechnik existieren grundsätzlich drei Arten von Schreib/Lesespeichern mit unterschiedlichen Speicherprinzipien, wobei die unter 2. und 3, genannten Speicherprinzipien und die nach diesen Prinzipien arbeitenden Speicher gattungsbildend sind:
   1. RAM (Abkürzung für Random Access Memory)
      Ein RAM ist ein Speicher, der sowohl wahlfreie Schreib- als auch Lesezugriffe auf jede Speicherzelle erlaubt. Ein solcher Speicher hat einen Adreßbus, durch den jede beliebige Speicherzelle adressiert werden kann, einen Kontrollbus zur Übertragung von Steuersignalen, wie z.B. read (lesen), write (schreiben), chip enable (Freigabe des Speichers), tristate output enable (Freigabe Ausgabe Dreizustandslogik) und mindestens einen Datenbus.
   2. LIFO (Abkürzung für Last In First Out)
      Ein Speicher der nach diesem Speicherprinzip arbeitet, hat ebenfalls einen Kontrollbus und mindestens einen Datenbus. Es fehlt jedoch in der Regel ein Adreßbus, da die Adressierung der Speicherzellen automatisch nach dem LIFO-Speicherprinzip arbeitet, nach dem das zuletzt geschriebene Datum als erstes gelesen wird. Die Lesereihenfolge ist die umgekehrte Schreibreihenfolge. Das Lifo-Speicherprinzip wird beispielsweise bei der sogenannten Stapelverarbeitung angewendet.
   3. FIFO (Abkürzung für First In First Out),
      Ein Speicher der nach diesem Speicherprinzip arbeitet, hat ebenfalls einen Kontrollbus und mindestens einen Datenbus. Es fehlt jedoch in der Regel ein Adreßbus, da die Adressierung der Speicherzellen automatisch nach dem FIFO-Speicherprinzip arbeitet, nach dem das zuerst geschriebene Datum auch als erstes wieder gelesen wird. Die Lesereihenfolge entspricht genau der Schreibreihenfolge. Die Warteschlange arbeitet beispielsweise nach diesem Speicherprinzip.
b) I/O-Baugruppen (Abkürzung für Input/Output (Ein-/Ausgabe ) Baugruppen= Peripheriegeräte), die große Datenmengen erhalten, werden heutzutage selten über den I/O-Adressraum angesprochen. Vielmehr werden die Adressen der I/O-Baugruppen über Speicheradressen im Speicheradressraum der Recheneinheit angesprochen, da die Zykluszeit moderner Prozessoren bei Speicherzyklen im Speicheradressraum wesentlich kürzer als bei Speicherzyklen im I/O-Adressraum ist. Dieses Ansprechen von I/O-Baugruppen über den Speicheradressen wird als MM-I/O (Abkürzung für Memory-Mapped I/O) bezeichnet. Mit Recheneinheit ist im Normalfall die zentrale Recheneinheit (CPU) mit ggf. nachgeschalteten Daten-/Adreßaufbereittungsbaugruppen gemeint.
c) Moderne Bus-Systeme mit einem gemeinsamen Adress/Daten-Bus (z.B. PCI-Bus oder AGP-Bus) übertragen häufig Adressen und Daten im Multiplex-Betrieb, in dem zuerst die Adresse und dann die Daten übertragen wird. Auf diese Weise können viele Datenleitungen eingespart werden.
   Für einen solchen Bus ist es vorteilhaft, Daten auf in einer Reihenfolge liegende (konsekutive) Speicherzellen zu schreiben, um nach Übertragung der Adresse eine große Menge hintereinanderliegender Speicherzellen mit Daten zu beschreiben. Diese Art der Datenübertragung wird als Burst-Betrieb bezeichnet.
d) I/O-Baugruppen mit hohem Datendurchsatz ist häufig ein FIFO-Speicher vorgeschaltet, der an den Bus der Recheneinheit angeschlossen ist. Durch die Pufferwirkung des FIFO-Speichers wird die Datenverarbeitung in der I/O-Baugruppe von den Schreib-/Lesezugriffen auf dem Bus entkoppelt. Hierdurch wird die Verarbeitungsgeschwindigkeit der Daten zwischen Recheneinheit und I/O-Baugruppe erheblich gesteigert.
   Obwohl ein FIFO-Speicher nur eine Adresse zur Ansteuerung benötigt, da die Adressierung der Speicherzellen automatisch nach dem FIFO-Speicherprinzip arbeitet, werden bei memory mapped I/O-Baugruppen die FIFOs üblicherweise in einen sehr großen Adressbereich, auch als Adresskachel bezeichnet, des Speicheradressraumes der Recheneinheit gelegt. Der Datenbus des FIFO-Speichers kann daher durch Zugriff auf unterschiedliche Adressen der Adresskachel angesprochen werden.
   Auf diese Weise wird erreicht, daß die FIFO-Speicher hohe Datenübertragungsraten erreichen, da dann der Bus für die I/O-Baugruppe optimal in der Burst-Betriebsart (vgl. 1.c)) arbeiten kann.
e) Moderne Recheneinheiten haben häufig ein sehr kompliziertes Adressierwerk. Viele dieser modernen Recheneinheiten besitzen entweder intern oder eine nachgeordnete Baugruppe (Write-Combining-Unit), die die Aufgabe hat, Schreibzugriffe auf den Speicheradreßraum ideal zu arrangieren, indem die Baugruppe die Daten reorganisiert und erst nach einer gewissen Verzögerung diese Daten in den Speicheradreßraum schreibt. Ziel der Reorganisation ist es, einerseits 8-bit / 16-bit - Schreibzugriffe möglichst zu einem Gesamtwort (z.Zt. meistens 32-bit) zusammenzufassen (Byte-Pairing), und andererseits eine Reihenfolge zwischen den Gesamtworten oder Daten so zu gestalten (Write-Combining (WC)), daß ein Burst-Betrieb an dem Bus für I/O-Baugruppen erleichtert wird.

### 2. Probleme durch die Write-Combining-Unit bei I/O-Baugruppen

a) Die Write-Combining-Unit bewirkt, daß regelmäßig die Reihenfolge der Schreibzugriffe auf dem Bus für I/O-Baugruppen nicht der im Programmablauf vorgegeben Reihenfolge der Schreibereignisse entspricht. Da die Recheneinheiten teilweise sogar mit mehreren Write-Combining-Units und Cache-Speichern arbeiten, die nach strategischen Prinzipien arbeiten (z.B. LRU, Least Recently Used), besteht i.d.R. keine vernünftige Möglichkeit, die Reihenfolge der Schreibzugriffe der Write-Combining-Unit auf dem Bus für die I/O-Baugruppen zu beeinflussen.
b) Memory-Mapped I/O-Baugruppen (MM-I/O) (vgl. 1.b)) sind häufig mit einem FIFO-Speicher an den Bus angeschlossen, (vgl. 1.d)). In diese FIFOs wird über deren Datenbus häufig ein Gemisch aus Daten, nämlich Operatoren und Operanden geschrieben, wobei hier die polnische, häufiger jedoch die umgekehrt polnische Notation angewendet wird (d.h. es werden erst die Operanden und dann die Operatoren übertragen).
c) Aus 2.a) und 2.b) folgt, daß hier ein erhebliches Problem vorliegt, denn in einer bestimmten Abfolge aus Operatoren und Operanden, darf die Reihenfolge der Daten keinesfalls vertauscht wird. Aus diesem Grund ist es praktisch kaum möglich, den Adressbereich der FIFO-Speicher in Verbindung mit der WC-Unit einer Recheneinheit anzusprechen (vgl. 2.a). Deshalb wird für den Adressbereich des FIFO-Speicher üblicherweise die WC-Unit ausgeschaltet. Hierdurch verringert sich allerdings der Datendurchsatz an den Bus für die I/O-Baugruppe auf 10-20% des maximalen Datendurchsatzes, den die Recheneinheit mit eingeschalteter WC-Unit erreichen würde.
d) Um das Abschalten der WC-Unit zu vermeiden, gibt es Verfahren, die trotz eingeschalteter WC-Unit eine gesicherte Datenreihenfolge beim Schreiben in den FIFO-Speicher einer I/O-Baugruppe sicher stellen.
   Hierzu werden die Daten erst in einen Zwischenspeicher des Arbeitsspeichers der Recheneinheit geschrieben. Nach Schreiben des letzten Datums wird eine Befehlsfolge an die I/O-Baugruppe gegeben, so daß sich diese die Daten nun selbständig - ohne weitere Hilfe durch die Recheneinheit- aus dem Zwischenspeicher holt. Diese Betriebsart wird als DMA-(Abkürzung für direct memory access) Modus bezeichnet.
   In der Praxis werden meistens zwei oder mehr Zwischenspeicher vorgesehen, damit die Recheneinheit schon einen neuen Zwischenspeicher füllen kann, während der vorherige noch von der I/O-Baugruppe ausgelesen wird.
   Da bei dieser Methode die Recheneinheit und die I/O-Baugruppe quasi gleichzeitig auf demselben Speicher schreibend und lesend zugreifen, ergeben sich hier erhebliche Arbitrationsverluste.
   Obwohl der DMA -Modus i.d.R. besser ist als ein Betrieb mit ausgeschaltetem WC-Unit, wird der maximale Datendurchsatz an dem Bus für die I/O-Baugruppe nicht erreicht.

Ausgehend von diesem Stand der Technik liegt der Erfindung die Aufgabe zugrunde, ein Verfahren zum Betrieb eines Speichers der eingangs erwähnten Art zu schaffen, das auch dann, wenn die Reihenfolge der Schreibzugriffe auf den Speicher nicht der in einem Programmablauf vorgegeben Reihenfolge der Schreibzugriffe entspricht, sicherstellt, daß die Daten in geordneter Reihenfolge aus dem Speicher ausgelesenen werden können und nicht vertauscht werden. Außerdem liegt der Erfindung die Aufgabe zugrunde ein Verfahren zu schaffen, das trotz einer Reorganisation der Datenreihenfolge im Speicheradreßraum einer Recheneinheit eine gesicherte Datenreihenfolge beim Betrieb einer I/O-Baugruppe an einem Bus der Recheneinheit bei hohem Datendurchsatz sicherstellt.

Die Lösung dieser Aufgabe basiert auf dem Gedanken, die Schreibzugriffe des Speichers denen eines RAM und die Auslesezugriffe den Speicherprinzipien des FIFO anzunähern. Der entscheidende Unterschied zum FIFO besteht allerdings darin, daß nach dem erfindungsgemäßen Verfahren nicht die Anzahl der ungelesenen Speicherzellen, sondern die Lage der Speicherzellen in ihrer Reihenfolge berücksichtigt wird.

Im einzelnen wird die Aufgabe durch die Merkmale des Anspruchs 1 gelöst.

Wie auch bei den Speicherprinzipien LIFO, FIFO (vgl. 1.a)2. und 1.a)3.) lassen sich Speicher, die nach dem erfindungsgemäßen Speicherprinzip arbeiten, insbesondere auch als diskrete Bauelemente mit entsprechender Firmware realisieren.

Ein solcher Speicher besitzt beispielsweise ein erstes Array mit einer Gesamttiefe von k Speicherzellen und ein weiteres Array mit der Tiefe von k Gültigkeitszellen, in das zu jeder Speicherzelle die Information geschrieben wird, ob die Speicherzelle beschrieben (valid) oder leer (invalid) ist. Diese Information ist in einer einfachen Ausführung ein Bit, das eindeutig den Gültigkeitszustand (valid/invalid) jeder Speicherzelle beschreibt.

Alternativ können die Informationen über den Gültigkeitszustand mit in die Speicherzellen selbst geschrieben werden. Hierdurch werden die jeder Speicherzelle zugewiesenen Daten um das Bit für den Gültigkeitszustand größer.

Zum Zurücksetzen der Informationen über den Gültigkeitszustand der Speicherzellen ist in dem Speicher beispielsweise ein Resetmechanismus vorgesehen, mit dem die Gültigkeitsbits aller Speicherzellen auf den Zustand 'Invalid' gesetzt werden können.

Das Auslesen erfolgt beispielsweise über eine Ausleseeinneit, die die Speicherzellen entsprechend ihrer Reihenfolge ausgehend von der zuerst beschriebenen Speicherzelle ausliest.

Wenn die Information darüber, ob die Speicherzelle beschrieben oder leer ist, unmittelbar bei jedem Auslesen der Speicherzelle zurückgesetzt wird, müssen die Gültigkeitszellen des Speichers nur beim Einschalten einmalig auf 'leer' zurückgesetzt werden.

Der Betrieb einer I/O-Baugruppe an einem Bus einer Recheneinheit ist auch bei einer Reorganisation der Datenreihenfolge im Speicheradreßraum der Recheneinheit unproblematisch, wenn die I/O-Baugruppe über einen nach einem oder mehreren der Ansprüche 1 bis 6 betriebenen Speicher an den Bus für die I/O-Baugruppe der Recheneinheit angeschlossen wird. Hierzu werden dies Adressen jeder Speicherzelle des Speichers in einen großen Adressbereich des Speicheradressraumes der Recheneinheit gelegt. Anders als bei memory mapped I/O-Baugruppen mit zwischengeschaltetem FIFO ist daher jeder Adresse eine bestimmte Speicherzelle des erfindungsgemäß betriebenen Speichers zugewiesen.

Da das Auslesen gemäß der Erfindung sehr ähnlich wie bei einem FIFO-Speicher ist, kann der erfindungsgemäß betriebene Speicher sehr leicht in bestehende Umgebungen eingebaut werden. Zum Auslesen werden dieselben Steuersignale wie beim FIFO-Speicher benötigt (d.h. NewDataAvailable oder NoDataAvailable).

Da bisherige FIFOs von I/O-Baugruppencontrollern üblicherweise durch Mehrfachadressierung in einen Adreßbereich des Speicheradressraumes eingeblendet werden, ist in der Regel kein größerer Adressbereich erforderlich.

Da bekannte Programmtechniken auch FIFO-Speicher über größere Adreßbereiche ansprechen und mit steigender Adresse beschreiben, sind bei Verwendung des erfindungsgemäß betriebenen Speichers kaum Änderungen an bestehenden Programmen nötig. Lediglich beim Einleiten der Datenübertragung müssen die Gültigkeitsinformationen (Valid/Invalid) und der Auslesezeiger des Speichers auf die in der Reihenfolge erste zu beschreibende Speicherzelle zurückgesetzt werden.

Durch Kombination der Merkmale der Ansprüche 2, 4,5 und 6 läßt sich erreichen, daß höchst selten, bestenfalls nie ein Rücksetzen der Information über den Gültigkeitszustand der Speicherzellen sowie des Auslesezeigers des Speichers erforderlich wird.

Nachfolgend wird die Erfindung anhand eines im Beispiel als "RIFO" (Abkürzung für Random In First Out) bezeichneten Speichers mit unmittelbarem Rücksetzen der Gültigkeitszellen verdeutlicht:

| **a) Inhalt des Speichers vor dem Programmstart** | | |
|---|---|---|
| Rifo[0] := ? | Invalid | **←Lesezeiger** |
| Rifo[2] := ? | Invalid | |
| Rifo[3] := ? | Invalid | |
| Rifo[4] := ? | Invalid | |
| Rifo[5] := ? | Invalid | |
| Rifo[6] := ? | Invalid | |
| Rifo[7] := ? | Invalid | |
| Rifo[8] := ? | Invalid | |
| Rifo[9] := ? | Invalid | |

| **b) Programmereignisse und gestörte Schreibreihenfolge aufgrund der WC-Unit der zentralen Recheneinheit** | | |
|---|---|---|
| Programmereignisse: | | Schreibereignisse: |
| Rifo[0] := DataA; | | DataA |
| Rifo[1] := DataB; | | DataB |
| Rifo[2] := DataC; | | DataE |
| Rifo[3] := DataD; | | DataF |
| Rifo[4] := DataE; | → → → WriteCombineUnit →→→ | DataC |
| Rifo[5] := DataF; | | DataD |
| Rifo[6] := DataG; | | DataI |
| Rifo[7] := DataH; | | DataK |
| Rifo[8] := DataI; | | DataG |
| Rifo[9] := DataK; | | DataH |

| **c) RIFO-Inhalt nach den ersten vier Schreibereignissen (DataA, DataB, DataE, DataF)** | | |
|---|---|---|
| Rifo[0] := DataA; | Valid | **← Lesezeiger** (wartend) |
| Rifo[1] := DataB; | Valid | |
| Rifo[2] := ? | Invalid | |
| Rifo[3] := ? | Invalid | |
| Rifo[4] := DataE; | Valid | |
| Rifo[5] := DataF; | Valid | |
| Rifo[6] := ? | Invalid | |
| Rifo[7] := ? | Invalid | |
| Rifo[8] := ? | Invalid | |
| Rifo[9] := ? | Invalid | |

| **d) Ausgabe der ersten Zellen durch die Leseeinheit und, neuer Zustand der Gültigkeitszellen** | | |
|---|---|---|
| Rifo[0] := DataA; | Invalid | |
| Rifo[1] := DataB; | Invalid | |
| Rifo[2] := ? | Invalid | **← Lesezeiger** (wartend) |
| Rifo[3] := ? | Invalid | |
| Rifo[4] := DataE; | Valid | |
| Rifo[5] := DataF; | Valid | |
| Rifo[6] := ? | Invalid | **Leseeinheit →** DataA, DataB |
| Rifo[7] := ? | Invalid | |
| Rifo[8] := ? | Invalid | |
| Rifo[9] := ? | Invalid | |

| **e) weitere vier Schreibereignisse (DataC, DataD, DataI, DataK)** | | |
|---|---|---|
| Rifo[0] := DataA; | Invalid | |
| Rifo[1] := DataB; | Invalid | |
| Rifo[2] := DataC; | Valid | **← Lesezeiger** (wartend) |
| Rifo[3] := DataD; | Valid | |
| Rifo[4] := DataE; | Valid | |
| Rifo[5] := DataF; | Valid | |
| Rifo[6] := ? | Invalid | |
| Rifo[7] := ? | Invalid | |
| Rifo[8] := DataI; | Valid | |
| Rifo[9] := DataK; | Valid | |

| **f) Ausgabe weiterer vier Zellen durch die Leseeinheit und neuer Zustand der Gültigkeitszellen** | | |
|---|---|---|
| Rifo[0] := DataA; | Invalid | |
| Rifo[1] := DataB; | Invalid | |
| Rifo[2] := DataC; | Invalid | |
| Rifo[3] := DataD; | Invalid | **Leseeinheit →** DataC, DataD, DataE, DataF |
| Rifo[4] := DataE; | Invalid | |
| Rifo[5] := DataF; | Invalid | |
| Rifo[6] := ? | Invalid | **← Lesezeiger** (wartend) |
| Rifo[7] := ? | Invalid | |
| Rifo[8] := DataI; | Valid | |
| Rifo[9] := DataK; | Valid | |

| **g) weitere Schreibereignisse (DataG, DataH)** | | |
|---|---|---|
| Rifo[0] := DataA; | Invalid | |
| Rifo[1] := DataB; | Invalid | |
| Rifo[2] := DataC; | Invalid | |
| Rifo[3] := DataD; | Invalid | |
| Rifo[4] := DataE; | Invalid | |
| Rifo[5] := DataF; | Invalid | |
| Rifo[6] := DataG; | Valid | **← Lesezeiger** (wartend) |
| Rifo[7] := DataH; | Valid | |
| Rifo[8] := DataI; | Valid | |
| Rifo[9] := DataK; | Valid | |

| **h) Ausgabe weiterer vier Zellen durch die Leseeinheit und neuer Zustand der Gültigkeitszellen** | | |
|---|---|---|
| Rifo[0] := DataA; | Invalid | |
| Rifo[1] := DataB; | Invalid | |
| Rifo[2] := DataC; | Invalid | |
| Rifo[3] := DataD; | Invalid | |
| Rifo[4] := DataE; | Invalid | |
| Rifo[5] := DataF; | Invalid | |
| Rifo[6] := DataG; | Invalid | **Leseeinheit →** DataG, DataH, DataI, DataK |
| Rifo[7] := DataH; | Invalid | |
| Rifo[8] := DataI; | Invalid | |
| Rifo[9] := DataK; | Invalid | |
| | | **← Lesezeiger** (wartend) |

## Patentansprüche

1. Ein Verfahren zum Schreiben und Lesen von Daten in bzw. aus einem Speicher mit mehreren in einer Reihenfolge angeordneten Speicherzellen, bei dem die Speicherzellen bereits wahrend des Schreibens in geordneter Reihenfolge ausgelesen werden können, **dadurch gekennzeichnet**
- daß die Daten in beliebiger Reihenfolge in die den Daten zugewiesenen Speicherzellen geschrieben werden
- daß jeder Speicherzelle eine Information darüber zugeordnet wird, ob die Speicherzelle beschrieben oder leer ist
- daß mit jedem Schreiben in eine Speicherzelle die Information generiert wird, daß die Speicherzelle beschrieben ist
- daß die Speicherzellen entsprechend, ihrer Reihenfolge ausgelesen werden, sobald ihnen die Information zugeordnet ist, daß sie beschrieben wurden,
- daß das Auslesen der Speicherzellen unterbrochen wird, sobald sich in der Reihenfolge der Speicherzellen eine leere Speicherzelle befindet und
- daß die Information darüber, ob die Speicherzellen beschrieben oder leer sind, zurückgesetzt werden.

2. Verfahren nach Anspruch 1, **dadurch gekennzeichnet**, daß die Information darüber, ob die Speicherzelle beschrieben oder leer ist, unmittelbar bei jedem Auslesen der Speicherzelle zurückgesetzt wird.

3. Verfahren nach Anspruch 1, **dadurch gekennzeichnet**, daß die Informationen darüber, ob die Speicherzellen beschrieben oder leer sind, nach dem Auslesen mehrerer, insbesondere sämtlicher Speicherzellen gleichzeitig zurückgesetzt werden.

4. Verfahren nach einem der Ansprüche 1 bis 3, **dadurch gekennzeichnet**, daß die Speicherzellen nach Auslesen der in der Reihenfolge letzten Speicherzelle automatisch erneut entsprechend ihrer Reihenfolge ausgelesen werden, sobald diese mit neuen Daten beschrieben wurden 〈!!!〉.

5. Verfahren nach einem der Ansprüche 1 bis 4, **dadurch gekennzeichnet**, daß ausschließlich in solche Speicherzellen geschrieben werden kann, denen eine Information zugeordnet ist, daß die Speicherzelle leer ist.

6. Verfahren nach Anspruch 5, **dadurch gekennzeichnet**, daß das Schreiben in jede Speicherzelle, der die Information zugeordnet ist, daß die Speicherzelle beschrieben ist, solange unterbrochen wird, bis der Speicherzelle die Information zugeordnet wird, daß die Speicherzelle leer ist.

7. Verfahren zum Betrieb einer I/O-Baugruppe an einem Bus einer Recheneinheit, **dadurch gekennzeichnet**, daß die I/O-Baugruppe über einen nach einem oder mehreren der Ansprüche 1 bis 6 betriebenen Speicher an den Bus für die I/O-Baugruppe der Recheneinheit angeschlossen wird, wobei die Reihenfolge in der die Daten von der Recheneinheit auf den Bus geschrieben werden, nicht in jedem Fall der von einem auf der Recheneinheit ablaufenden Programm vorgesehenen Reihenfolge entspricht, in der die Daten auf den Bus geschrieben werden sollen.

8. Verfahren nach Anspruch 7, **dadurch gekennzeichnet**, daß die von dem auf der Recheneinheit ablaufenden Programm vorgesehene Reihenfolge in der die Daten auf den Bus geschrieben werden sollen, der Reihenfolge entspricht, in der die Speicherzellen des Speichers angeordnet sind.

9. Verfahren nach Anspruch 7 oder 8, **dadurch gekennzeichnet**, daß die Speicherzellen des Speichers über einen von der Recheneinheit reservierten Adreßbereich ihres Adreßraumes angesprochen werden.
